Europäisches Patentamt

European Patent Office

Office européen des brevets

(11) Numéro de publication: **0 173 600**
A1

## (12) DEMANDE DE BREVET EUROPEEN

(21) Numéro de dépôt: 85401404.0

(22) Date de dépôt: 10.07.85

(51) Int. Cl.⁴: **F 16 J 1/00,** F 16 J 1/08, F 02 F 3/00

(30) Priorité: **13.07.84 FR 8411165**

(71) Demandeur: **Melchior, Jean Frédéric, 126 bld. Montparnasse, F-75014 Paris (FR)**

(43) Date de publication de la demande: **05.03.86 Bulletin 86/10**

(72) Inventeur: **Melchior, Jean Frédéric, 126 bld. Montparnasse, F-75014 Paris (FR)**

(84) Etats contractants désignés: **AT BE CH DE GB IT LI LU NL SE**

(74) Mandataire: **Lemoine, Michel et al, Cabinet Michel Lemoine 13 Boulevard des Batignolles, F-75008 Paris (FR)**

(54) Piston pour moteur à combustion interne ou pour compresseur.

㊗ Le piston (1) porte une garniture annulaire continue (6) qui remplit la gorge (7) et est faite d'une matière semi-solide mais légèrement déformable. Des moyens tendent à faire sortir la garniture (6) de la gorge (7) et des moyens de lubrification (19, 25, 28, 34) maintiennent un film d'huile entre la paroi intérieure (3) du cylindre (2) et la paroi extérieure cylindrique de la garniture (6).

EP 0 173 600 A1

L'invention est relative aux pistons pour moteurs à combustion interne ou pour compresseurs, c'est-à-dire pour des machines où le gaz de travail est à la fois à haute pression et à haute température. Dans ces machines, l'étanchéité entre la chambre de travail et le carter du vilebrequin est en général assurée par des segments métalliques dont la surface extérieure épouse intimement la paroi intérieure du cylindre pour constituer un contact lubrifié afin d'éviter le grippage et de limiter l'usure.

Les difficultés de cette solution sont les suivantes :

1°) On ne peut pas éviter qu'il existe transitoirement, entre la paroi intérieure du cylindre, le segment et le piston des différences de température de plusieurs dizaines de degrés centigrades qui entraînent des dilatations différentielles de plusieurs dixièmes de millimètre, très supérieures à l'épaisseur du film d'huile qui se compte en microns. Aux écarts de diamètre dus à la dilatation thermique différentielle s'ajoutent ceux qui sont dus à la dilatation de la chemise relativement mince du cylindre sous l'effet de la pression du gaz de travail. C'est pourquoi il est nécessaire, comme on le sait, de couper le segment et de lui laisser de la liberté de mouvement dans la gorge du piston dont le diamètre extérieur est toujours inférieur au diamètre intérieur du cylindre.

2°) Au voisinage du point mort haut combustion où la pression et la température sont maximales dans la chambre de travail, la vitesse du segment est nulle ainsi que la portance hydrodynamique du film d'huile. Le segment est alors appliqué sur la paroi intérieure du cylindre et l'huile résiduelle est alors chassée vers le haut (si l'on suppose par convention que la chambre de travail est située au-dessus du piston) et surtout vers le bas jusqu'à entraîner un contact métal-métal qui use le haut du cylindre et le segment. La meilleure solution pour ralentir l'épuisement du film d'huile serait d'augmenter la hauteur du segment et donc le volume d'huile emprisonné pour une section de fuite identique, mais ceci est difficile à réaliser à cause du basculement cyclique du piston, autour de son axe de liaison avec la bielle, qui conduit à donner au segment une forme bombée pour maintenir un cercle de contact sur la paroi intérieure du cylindre et un bon appui du segment sur la face inférieure de la gorge du piston. On est donc contraint à passer le point mort haut en régime de lubrification onctueuse plus ou moins limite, l'huile étant maintenue sur la paroi intérieure du cylindre dans des rayures, généralement hélicoïdales, ménagées par un traitement de paroi couramment dénommé "honing".

Par ailleurs, la coupe du segment laisse un passage de gaz brûlants le long du piston (phénomène appelé "blow-by"), entraînant pollution de l'huile de graissage et échauffement de l'interface piston-cylindre ; de plus, il entraîne une usure plus ou moins rapide du haut du cylindre par disparition du film d'huile et introduction de particules abrasives. Il faut ajouter que, pour être libre dans sa gorge, le segment métallique bat à un certain moment du cycle, c'est-à-dire passe d'un appui sur la face inférieure de la gorge à un appui sur la face supérieure. Il laisse alors un passage de gaz, par le fond de la gorge, qui entraîne de l'huile vers la chambre de combustion quand la pression intersegment est supérieure à la pression dans la chambre et qui augmente la consommation d'huile.

Pour éliminer ces inconvénients, on a déjà proposé de remplacer le segment métallique usuel des pistons pour moteurs à combustion interne, par une garniture de forme annulaire continue. Cette garniture connue possède un talon qui est solidaire du piston et une lèvre élastique qui est logée dans une gorge du piston avec une liberté de débattement radial compatible avec le jeu radial du piston dans le cylindre. Cette gorge communique avec la chambre de travail par un dégagement annulaire entourant le haut du piston et dimensionné de façon à maintenir, dans la mesure du possible, une zone tampon d'air relativement frais entre les gaz de combustion et la lèvre de la garniture. On constate toutefois que, dans certaines conditions de fonctionnement, la protection ainsi assurée à la lèvre de la garniture est insuffisante et que la lèvre brûle par un échauffement dû au transfert alternatif de gaz entre la gorge et la chambre.

L'invention a pour but de réaliser un piston qui assure une étanchéité parfaite en fonctionnement au moyen d'un film d'huile qui ne s'épuise à aucun moment du cycle de travail. L'invention a également pour but de maintenir en fonctionnement, entre la surface intérieure du cylindre et la surface extérieure d'une garniture de forme annulaire continue portée par le piston, un jeu de valeur constamment égale à l'épaisseur d'un film d'huile en régime hydrodynamique, quelles que soient les variations de diamètre du cylindre et du piston dues notamment à leurs températures différentielles ou à des déformations cycliques. L'invention a encore pour but d'utiliser judicieusement les propriétés de fluage et d'élasticité de la matière constituant la garniture.

Selon l'un de ses aspects, l'invention a donc pour objet un piston pour moteur à combustion interne ou compresseur, destiné à être animé d'un mouvement alternatif ininterrompu en fonctionnement normal, dans un cylindre où il sépare l'une de l'autre deux enceintes remplies respectivement d'un gaz à pression relativement haute et d'un gaz à pression relativement basse, lequel piston porte une garniture de forme annulaire continue, contribuant à assurer l'étanchéité entre ces deux enceintes et logée dans une gorge annulaire du piston ouverte vers l'emplacement de la paroi intérieure du cylindre, et comporte des moyens de lubrification ainsi que des moyens de guidage évitant un basculement trop important du piston autour de son axe, essentiellement caractérisé en ce que la garniture remplit ladite gorge et est faite d'une matière semi-solide, mais légèrement déformable sous l'effet des sollicitations susceptibles d'être développées en fonctionnement dans cette gorge ; en ce que le piston comporte des moyens de mise sous contrainte de pression de la garniture tendant à faire sortir celle-ci de ladite gorge vers l'extérieur de la paroi cylindrique du piston ; en ce que le diamètre extérieur du piston, de part et d'autre de la gorge, est suffisamment grand, par rapport au diamètre intérieur du cylindre, pour que le jeu annulaire entre le piston et la paroi intérieure du cylindre ne puisse permettre à la matière de la garniture de s'échapper par fluage par ledit jeu dans les conditions normales de fonctionnement du piston ; en ce que les moyens de lubrification sont constitués d'une alimentation en huile et de moyens de distribution interne susceptibles de remplir d'huile ledit jeu annulaire au moins contre le côté de ladite garniture qui est tourné vers l'enceinte remplie du gaz à pression relativement basse ; et en ce que la hauteur extérieure de la garniture, mesurée parallèlement à l'axe du piston, est suffisamment grande pour qu'un film de cette huile se maintienne en fonctionnement le long et autour de la garniture malgré les efforts auxquels ce film est soumis parallèlement et perpendiculairement à cet axe sous l'effet notamment de la différence entre les deux susdites pressions, de la poussée latérale du piston et de la pression interne de la garniture, même aux points morts du piston.

Avec un tel piston, quelles que soient les variations auxquelles sont soumis en fonctionnement le diamètre extérieur du piston et/ou le diamètre intérieur du cylindre, le jeu entre la surface intérieure du cylindre et la surface extérieure de la garniture est maintenu à une valeur égale à l'épaisseur d'un film d'huile en régime hydrodynamique, par un équilibrage automatique de la pression interne de la garniture. L'huile introduite par les susdits moyens de lubrification assure donc l'entretien d'un tel film d'huile dont le régime hydrodynamique et le renouvellement sont entretenus, en dehors des points morts du piston, par le mouvement relatif du piston et du cylindre et, aux points morts ou au voisinage de ceux-ci, par le mouvement de l'huile qui s'échappe, sous l'action des forces hydrostatiques, du jeu entre cylindre et garniture alors pratiquement sans mouvement relatif. L'étanchéité entre les deux enceintes susvisées est ainsi assurée par la coopération entre la garniture, qui remplit la gorge et empêche donc les gaz de passer par celle-ci, et le film d'huile qui forme une barrière étanche entre la garniture et la paroi intérieure du cylindre, laquelle paroi est de préférence aussi parfaitement lisse que possible.

Il est à noter que l'on a déjà décrit des pistons, destinés à être animés d'un mouvement alternatif intermittent dans des machines telles que presses à filer à chaud des billettes métalliques (FR-A-1 600 889 et FR-A-2 051 947) ou accumulateurs hydrauliques (US-A-3 169 455), qui portent des garnitures susceptibles d'être maintenues par dilatation contre la paroi intérieure d'un cylindre mais les dimensions transversales mutuelles des pistons et des cylindres et l'absence de moyens de lubrification ainsi que d'autres paramètres prouvent que ces pistons sont incapables de donner naissance en fonctionnement à un film d'huile hydrodynamique entre garnitures et cylindres, même si on les adaptait à des machines à mouvement alternatif ininterrompu.

D'autres caractéristiques et avantages du piston conforme à l'invention apparaîtront à la lecture du complément de description qui suit et qui se réfère aux dessins ci-annexés.

Selon un autre de ses aspects, l'invention a pour objet un moteur à combustion interne ou un compresseur, caractérisé en ce qu'il comprend au moins un cylindre et un piston logé dans ce cylindre et comportant les caractéristiques susvisées.

La figure 1 des dessins représente, en coupe axiale par deux plans perpendiculaires selon la ligne I - I de la figure 2, un piston pour moteur à combustion interne conforme à l'un des modes de réalisation préférés de l'invention.

Les figures 2 à 4 représentent le même piston en coupes transversales approximativement selon les lignes II-II, III-III et IV-IV de la figure 1 respectivement.

La figure 5 est un schéma permettant d'expliquer le fonctionnement du piston représenté aux figures 1 à 4.

La figure 6 représente, par une coupe axiale analogue à celle de la figure 1, un piston conforme à un deuxième mode de réalisation préféré de l'invention.

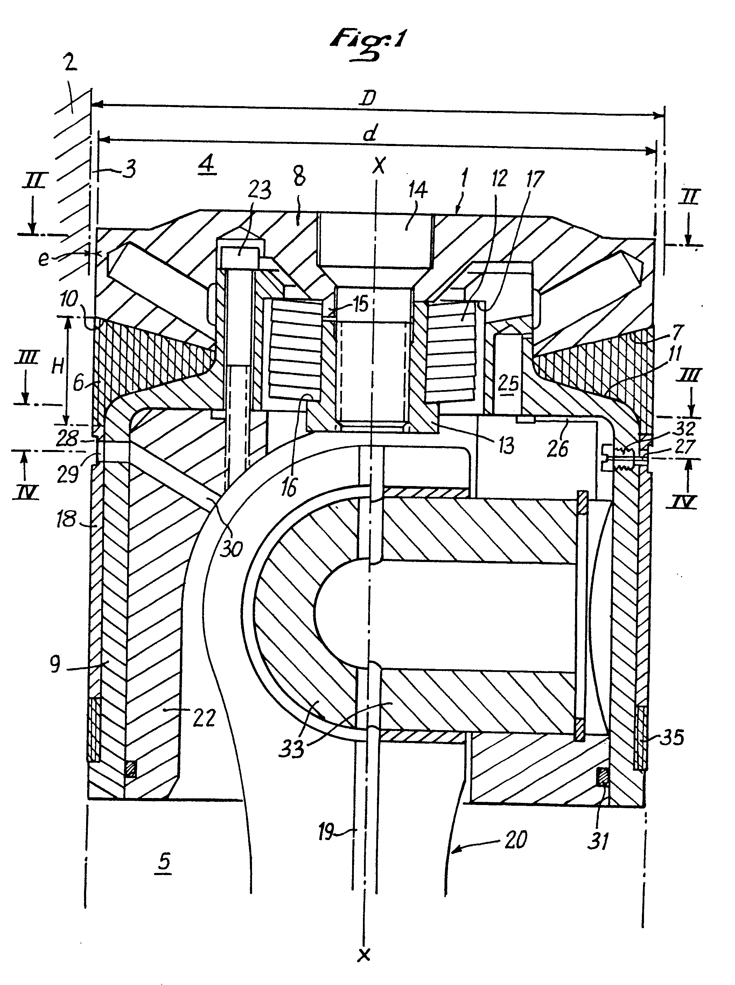

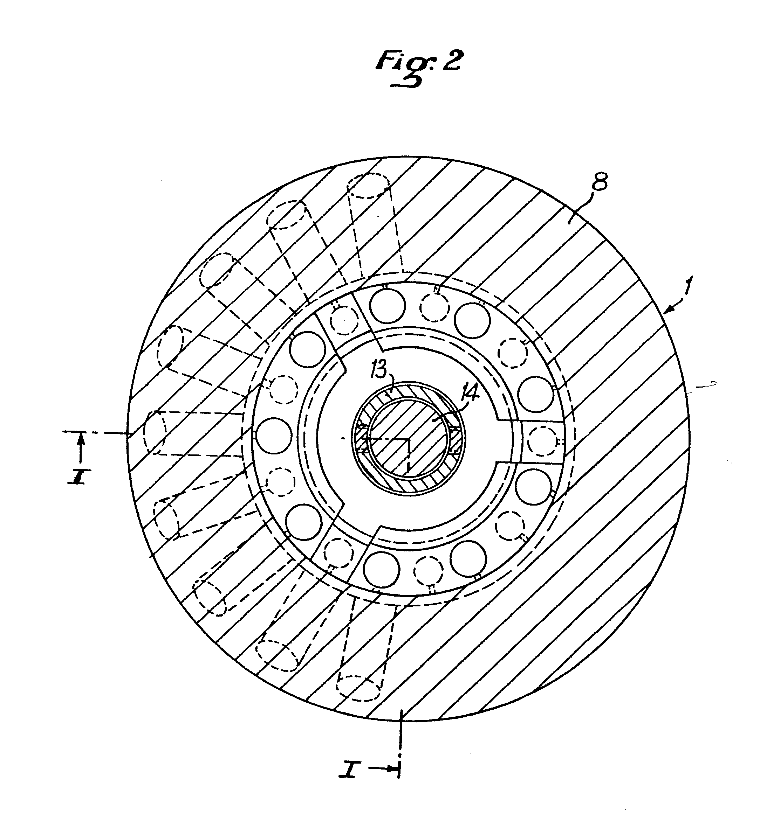

Le piston 1 qui est représenté sur les figures 1 à 4 est destiné à être animé d'un mouvement alternatif ininterrompu, en fonctionnement normal , dans un cylindre 2 dont la paroi latérale cylindrique intérieure 3 a été représentée en trait mixte à la figure 1. Par son mouvement alternatif ininterrompu, ce piston se distingue donc de ceux qui sont destinés à être animés d'un mouvement alternatif intermittent (longs temps de repos de durée indéterminée suivis de brefs déplacements) et dont deux exemples ont été rappelés en préambule. Dans ce cylindre 2, le piston 1 sépare l'une de l'autre deux enceintes 4 et 5 remplies respectivement d'un gaz à pression relativement haute (gaz de combustion) et d'un gaz à pression relativement basse (air du carter, à une pression égale à la pression atmosphérique ou différente de celle-ci).

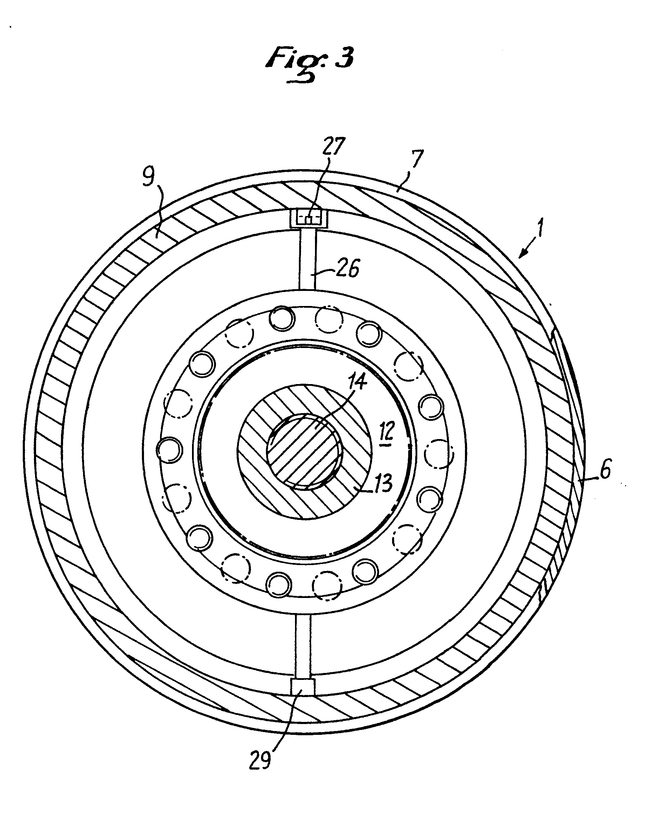

Le piston 1 porte une garniture 6 de forme annulaire continue (qui n'a été représentée que partiellement à la figure 3), contribuant à assurer l'étanchéité entre les deux enceintes 4 et 5 et logée dans une gorge annulaire 7 du piston 1 ouverte vers l'emplacement de la paroi intérieure 3 du cylindre 2. Par "gorge ouverte vers l'emplacement de la paroi intérieure du cylindre", on entend une gorge dont le profil méridien est fermé à l'exception de son ouverture latérale vers l'emplacement de la paroi latérale 3 du cylindre 2.

Le piston 1 comporte des moyens de lubrification ainsi que des moyens de guidage qui le positionnent dans le cylindre 2 en empêchant tout grippage entre la paroi extérieure métallique du piston 1 proprement dit et la paroi intérieure 3 du cylindre 2. Le piston 1 est en général fait d'un métal ou alliage métallique bien que d'autres matières telles que les céramiques puissent être envisagées pour sa composition.

Selon l'invention, la garniture 6 remplit la gorge 7 et est faite d'une matière semi-solide mais légèrement déformable sous l'effet des sollicitations susceptibles d'être développées en fonctionnement dans cette gorge 7. On choisit de préférence pour cela une matière plastique susceptible de résister aux températures atteintes au cours du fonctionnement du moteur ainsi qu'à l'action corrosive des hydrocarbures, huiles de graissage et gaz de combustion et de garder ses propriétés de déformabilité dans toute la gamme de ces températures, entre le démarrage à froid et la marche à pleine charge. Une matière qui se révèle particulièrement intéressante pour constituer la garniture 6 est le polytétrafluoréthylène contenant des charges de métal pour améliorer la conductivité thermique et qui peut être armé de fibres pour éviter le fluage dans certaines directions.

En outre, le piston 1 comporte des moyens de mise sous contrainte de pression de la garniture 6, tendant à faire sortir celle-ci de la gorge 7 vers l'extérieur de la paroi cylindrique du piston 1, en direction sensiblement radiale.

Le diamètre extérieur d du piston 1 est suffisamment grand, par rapport au diamètre intérieur D du cylindre 2, pour que le jeu radial e entre le piston 1 et la paroi intérieure 3 du cylindre 2 ne puisse permettre à la garniture 6 de s'échapper par fluage dans ledit jeu (vers le haut et vers le bas de la figure 1) dans les conditions normales de fonctionnement du piston 1.

Les moyens de lubrification portés par le piston 1 sont constitués d'une alimentation en huile et de moyens de distribution interne susceptibles de remplir d'huile le jeu annulaire e au moins contre le côté de la garniture 6 (côté inférieur à la figure 1) qui est tourné vers l'enceinte 5 remplie de gaz à pression relativement basse.

Enfin, la hauteur extérieur H de la garniture 6, mesurée parallèlement à l'axe X-X du piston 1, est suffisamment grande pour qu'un film d'huile se maintienne en fonctionnement le long de la garniture 6 et autour de celle-ci, et spécialement aux points morts du piston. Par "hauteur extérieure", on entend la hauteur de la garniture 6 mesurée sur sa surface extérieure cylindrique, la garniture 6 pouvant avoir une hauteur variable en direction radiale ainsi qu'il sera expliqué ci-après.

De préférence, les moyens de mise sous contrainte de pression de la garniture 6 sont des moyens tendant à diminuer la section transversale, et donc le volume, de la susdite gorge, généralement de façon sensiblement uniforme sur tout le périmètre de celle-ci.

Selon une solution particulièrement avantageuse, le piston 1 est divisé en deux éléments coaxiaux 8, 9 mobiles l'un par rapport à l'autre parallèlement à l'axe X-X du piston 1 et la gorge 7 du piston 1 est limitée à la fois par les deux éléments 8, 9 du piston 1. En d'autres termes, la gorge 7 est limitée par une première surface 10 appartenant à l'élément supérieur ou de tête 8 du piston 1 et par une deuxième surface 11 appartenant à l'élément inférieur 9 du piston 1. Pour faciliter la déformation de la garniture 6, la gorge 7 a de préférence une section transversale qui s'évase vers l'extérieur, par écartement progressif des surfaces 10 et 11. L'ensemble est tel que les forces opposées qui s'exercent de haut en bas sur l'élément de piston supérieur 8 par la pression des gaz contenus dans l'enceinte 4 et de bas en haut sur l'élément de piston inférieur 9 par la pression des gaz contenus dans l'enceinte 5, ainsi que les forces d'inertie et la réaction de l'axe du piston tendent à rapprocher les surfaces 10 et 11 l'une de l'autre et par conséquent à chasser la garniture 6 hors de sa gorge 7.

Entre les deux éléments 8 et 9 du piston, il est avantageusement prévu des moyens de sollicitation auxiliaires capables d'agir même en l'absence de différence de pression entre les deux enceintes 4 et 5, en vue d'assurer l'étanchéité du piston 1 au démarrage du moteur, ainsi qu'au point mort haut balayage d'un moteur à quatre temps.

Ces moyens de sollicitation peuvent être constitués de toute manière appropriée, par exemple à fluide sous pression refoulé par une pompe ou accumulateur hydraulique. Il semble plus avantageux toutefois de les constituer par au moins un ressort métallique, tel qu'un empilage de rondelles Belleville 12. Pour faciliter le montage et la mise en compression de cet empilage 12, on dispose celui-ci autour d'une pièce tubulaire 13 adaptée au bas et à la partie centrale de l'élément de piston 8 et serrée sur celui-ci à l'aide d'une vis 14, cette pièce tubulaire 13 étant empêchée de tourner par rapport à cet élément 8, par exemple à l'aide d'un tenon 15 prévu dans celui-ci et engagé dans un creux correspondant de la pièce tubulaire 13. L'empilage de rondelles 12, en prenant appui intérieurement sur un épaulement 16 de la pièce tubulaire 13 rendue solidaire de l'élément de piston 8, tend ainsi à soulever l'autre élément de piston 9 en agissant extérieurement sur un épaulement 17 de ce dernier élément de piston 9.

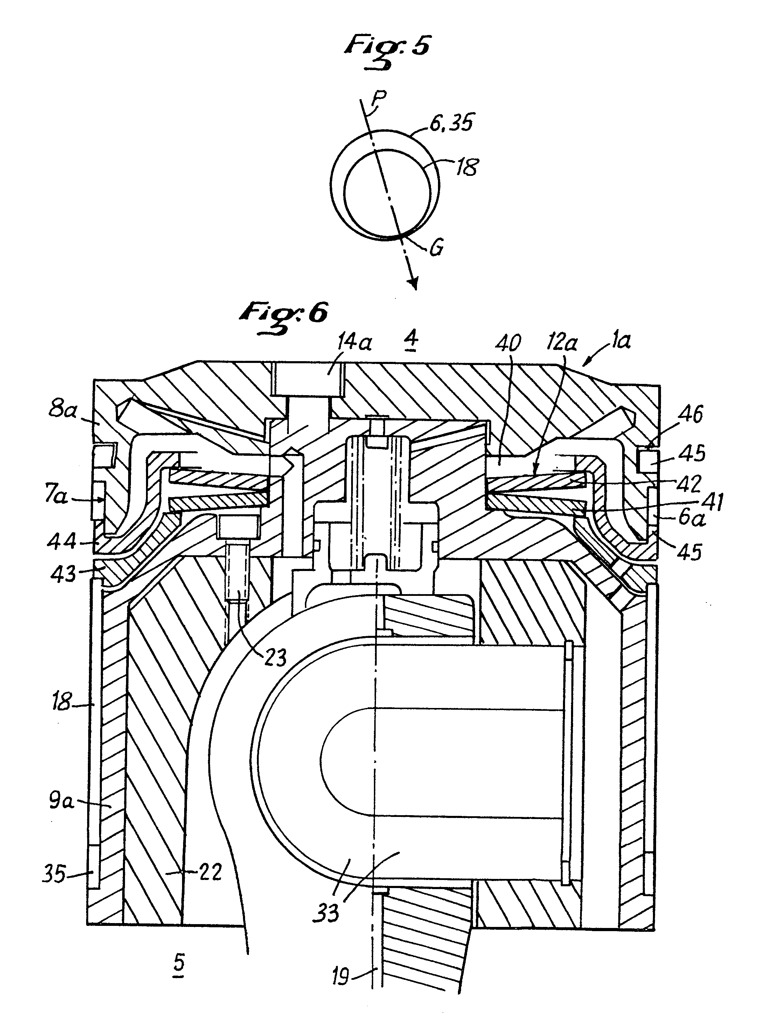

Les moyens de guidage contrôlant la position du piston 1 dans le cylindre 2 peuvent être constitués par exemple par un patin latéral cylindrique ou bague antifriction 18, en appui sur le cylindre côté poussée des gaz, constitué d'un matériau qui ne subisse aucun fluage dans toutes les conditions de fonctionnement et qui ait de bonnes qualités de frottement en régime de lubrification onctueuse, associé à une deuxième garniture 35, disposée à la partie inférieure de l'élément de piston inférieur 9, qui est faite d'une matière identique ou analogue à celle de la garniture 6 et qui est déformable comme celle-ci, vers la paroi intérieure 3 du cylindre 2. La bague antifriction 18, qui possède un jeu important, est agencée de façon à transmettre à la garniture inférieure 35 la pression hydrostatique exercée dans la garniture supérieure 6. Dans toutes les conditions de fonctionnement, la bague 18 et les deux garnitures 6 et 35 ont, comme montré schématiquement à la figure 5, une génératrice commune G en contact avec la paroi intérieure 3 du cylindre 2 dans le plan de la poussée latérale P due à l'obliquité de la bielle; les deux garnitures 6, 35, ayant toute leur surface extérieure en contact avec la paroi intérieure 3 du cylindre 2, assurent un rattrapage de jeu qui interdit le basculement du piston 1. Si on veut que le jeu entre cylindre et tête du piston soit uniforme, on usinera cette dernière de façon légèrement excentrée par rapport à la bague antifriction 18.

En ce qui concerne enfin les moyens de lubrification, ils comprennent d'une part une alimentation en huile sous pression de type connu, comportant un canal 19 établi selon la longueur de la bielle 20, communiquant avec l'intérieur de l'axe de piston 33 et avec un perçage et débouchant par un orifice 27 calibré dans une gorge annulaire 28 ménagée dans la bague 18 et déchargée au carter par un orifice 29 diamétralement opposé à l'orifice 27 afin d'alimenter tout le périmètre de ladite gorge 28.

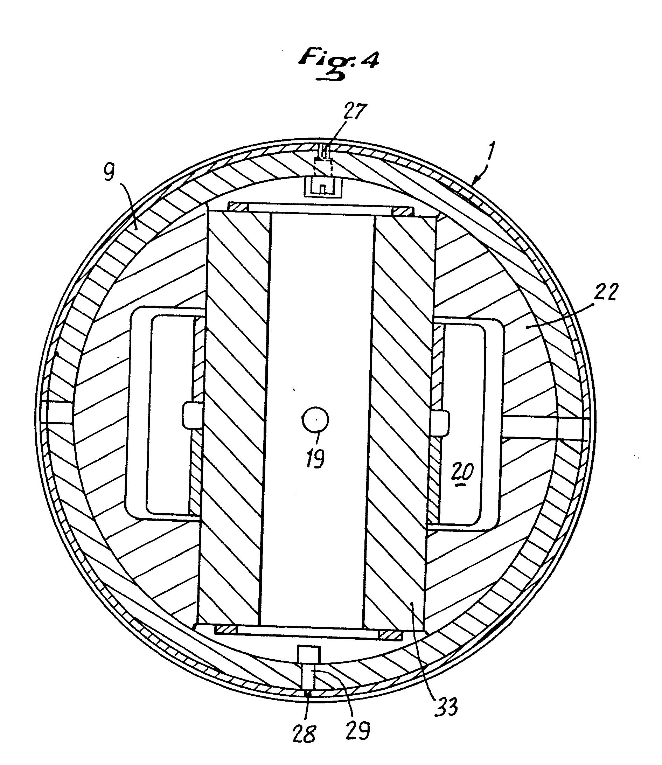

L'huile arrivant dans la gorge 28 se répartit tout le long de cette gorge et s'en échappe en partie pour assurer l'entretien d'un film d'huile hydrodynamique entre la paroi latérale extérieure de la garniture 6 et la paroi intérieure 3 du cylindre 2 et en partie par l'orifice 29 ménagé à 180° de l'orifice calibré 27 et communiquant par un canal 30 avec l'intérieur d'une calotte 22 qui est fixée à l'intérieur de l'élément de piston inférieur 9, à l'aide de vis 23 ou moyens de fixation analogues. Entre la calotte 22 et l'élément de piston inférieur 9, il est disposé un joint torique 31 qui empêche l'huile arrivant par
un canal 25, 26 de fuir entre ces éléments 22 et 9 et l'oblige donc à passer par l'orifice calibré 27. De préférence,
cet orifice calibré 27 traverse axialement une vis 32 qui
détermine la position angulaire mutuelle de l'élément de
piston 9 et de la bague antifriction 18 et par conséquent
l'alignement des canaux qui les traversent successivement.
L'axe usuel 33 qui relie le piston 1 à la bielle 20 a été
représenté en coupe axiale à la partie droite de la figure
1 et à la figure 4 et en coupe transversale à la partie
gauche de la figure 1.

On obtient ainsi un piston dont le fonctionnement est le suivant. La garniture 6 constitue une pièce
d'adaptation qui est capable de se déformer soit cycliquement à haute fréquence (pour des déformations faibles, différence de diamètre entre haut et bas du cylindre), soit à
basse fréquence (lors des mises en température). Au démarrage, lorsque la différence des pressions entre les enceintes 4 et 5 est insuffisante pour provoquer à elle seule la
déformation de la garniture 6 vers l'extérieur, l'action de
l'empilage de rondelles 12 se substitue ou s'associe à celle
de cette différence de pressions et la surface extérieure
de cette garniture 6 tendrait donc à s'appliquer directement contre la paroi intérieure 3 du cylindre 2. En fait,
l'huile arrivant dans la gorge 28 vient former un film sur
la totalité ou la plus grande partie de la hauteur de la
surface cylindrique extérieure de la garniture 6. Lorsque
le moteur commence à tourner de lui-même, la différence de
pressions entre les enceintes 4, 5 augmente en même temps
que la pression interne du film d'huile, si bien que la distance entre la paroi extérieure de la garniture 6 et la paroi intérieure 3 du cylindre 2 se maintient automatiquement
à la valeur qui correspond à l'épaisseur d'un film hydrodynamique, quelles que soient les variations relatives du diamètre extérieur d du piston 1 et du diamètre intérieur D du
cylindre 2. Les faibles pertes d'huile qui se produisent en particulier au voisinage du point mort haut du piston 1 sont compensées par l'arrivée d'huile dans la gorge 28.

Il est à noter que les efforts d'inertie tendent à rapprocher et à éloigner alternativement les éléments 8, 9 du piston 1 l'un de l'autre et qu'on doit en tenir compte dans le calcul des efforts axiaux exercés sur la garniture 6. La consommation d'huile sera donc contrôlée par réglage de la pression interne dans la garniture 6 et éventuellement par la géométrie de lèvres inférieures (non représentées) faisant saillie radialement par rapport à la garniture inférieure 35 et pouvant jouer un rôle de racleur. Elle pourra aussi être contrôlée par un gicleur placé dans l'orifice d'alimentation de l'anneau d'huile.

Selon une variante (non représentée), la bague antifriction 18 pourrait être constituée, non pas par une pièce indépendante, mais en une seule pièce avec l'une au moins des garnitures 6 et 35, par frittage des matières correspondant aux propriétés respectives de chacune de ces bague et garnitures.

Selon le mode de réalisation des figures 1 à 4, les moyens de mise sous contrainte de pression de la garniture principale 6 font intervenir essentiellement la différence des pressions qui règnent respectivement dans les enceintes 4 et 5 et qui agissent sur deux éléments de piston 8 et 9, mobiles axialement l'un par rapport à l'autre, et, à un degré moindre, un système élastique tel qu'un empilage de rondelles Belleville 12 qui intervient même en l'absence de différence entre les susdites pressions.

Selon le mode de réalisation de la figure 6, le piston constitue un ensemble rigide et les moyens de mise sous contrainte de pression de la garniture principale sont constitués essentiellement par un système élastique qui est analogue à celui 12 du mode de réalisation précédent et dont l'action est d'ailleurs aussi modulée par

13  0173600

les efforts d'inertie. Dans le mode de réalisation de la figure 6, les mêmes chiffres de référence sont utilisés pour désigner des éléments identiques ou analogues à ceux du mode de réalisation précédent, ces chiffres de référence étant éventuellement suivis de la lettre a pour des éléments un peu différents. C'est ainsi que l'on a désigné par 1a le piston, par 6a la garniture supérieure, par 7a la gorge recevant cette garniture 6a et par 12a le système élastique agissant sur cette garniture. De même, on a désigné par 8a et 9a les éléments supérieur et inférieur du piston 1a qui, dans ce cas, sont fixés rigidement l'un à l'autre par des vis telles que 14a.

Les deux éléments 8a et 9a délimitent entre eux une chambre annulaire 40 dans laquelle sont libres axialement deux ressorts annulaires 41 et 42, en forme de coupelles, qui constituent le système élastique 12a. Le ressort annulaire inférieur 41 prend appui, par son bord extérieur, contre une rondelle 43 qui prend elle-même appui par son bord extérieur sur la bague antifriction 18 et, par l'intermédiaire de celle-ci, sur la garniture annulaire 35. Les deux ressorts annulaires 40 et 41 sont en contact mutuel par leur bord intérieur. Le ressort annulaire supérieur 42 prend appui, par son bord extérieur, contre une rondelle 44 qui est libre axialement et qui possède un talon 45 venant fermer à sa partie inférieure la gorge 7a où est placée la garniture supérieure 6a. On voit donc que l'ensemble des deux ressorts 41 et 42 exerce sur la garniture supérieure 6a une poussée de bas en haut et sur l'ensemble de la bague antifriction 18 et de la garniture inférieure 35 une poussée de haut en bas dont l'effet est le même que celui des pressions régnant dans les chambres 4 et 5 selon le mode de réalisation précédent. Il est donc inutile de décrire à nouveau ce fonctionnement à propos du mode de réalisation de la figure 6.

De préférence, le piston 1a de la figure 6 com-

0173600

porte en supplément un segment métallique 45 qui est logé au-dessus de la garniture 6a dans une gorge 46 ménagée dans l'élément supérieur 8 et qui est destiné à empêcher le piston 1a de basculer autour de l'axe 33, ce segment 45 ayant une surface cylindrique.

Bien que l'invention ait été décrite et illustrée à propos d'un piston pour moteur à combustion interne, elle s'applique également avec avantage aux pistons pour compresseurs dont l'enceinte 4 constitue alors la chambre d'aspiration et de refoulement.

## REVENDICATIONS

1. Piston (1) pour moteur à combustion interne ou compresseur, destiné à être animé d'un mouvement alternatif ininterrompu en fonctionnement normal, dans un cylindre (2) où il sépare l'une de l'autre deux enceintes (4, 5) remplies respectivement d'un gaz à pression relativement haute et d'un gaz à pression relativement basse, lequel piston (1) porte une garniture (6) de forme annulaire continue, contribuant à assurer l'étanchéité entre ces deux enceintes (4, 5) et logée dans une gorge (7) du piston (1) ouverte vers l'emplacement de la paroi intérieure (3) du cylindre (2), et comporte des moyens de lubrification ainsi que des moyens de guidage positionnant le piston (1) dans le cylindre (2), caractérisé en ce que la garniture (6) remplit ladite gorge (7) et est faite d'une matière semi-solide mais légèrement déformable sous l'effet des sollicitations susceptibles d'être développées en fonctionnement dans cette gorge (7) ; en ce que le piston (1) comporte des moyens de mise sous contrainte de pression de la garniture (6) tendant à faire sortir celle-ci de ladite gorge (7) vers l'extérieur de la paroi cylindrique du piston (1); en ce que le diamètre extérieur (d) du piston (1), de part et d'autre de la gorge (6), est suffisamment grand, par rapport au diamètre intérieur (D) du cylindre (2), pour que le jeu annulaire (e) entre le piston (1) et la paroi intérieure (3) du cylindre (2) ne puisse permettre à la matière de la garniture (6) de s'échapper par fluage dans ledit jeu (e) dans les conditions normales de fonctionnement du piston (1) ; en ce que  les moyens de lubrification sont constitués d'une alimentation en huile (19, 21) et de moyens de distribution interne (34, 25, 26, 27, 28) susceptibles de remplir d'huile ledit jeu annulaire (e) au moins contre le côté de la garniture (6) qui est tourné vers l'enceinte (5) remplie de gaz à pression relativement basse ; et en ce que la hauteur extérieure (H) de la garniture (6), mesurée parallèlement à l'axe (X-X) du piston (1), est suf-

0173600

fisamment grande pour qu'un film de cette huile se maintienne en fonctionnement le long et autour de la garniture (6) malgré les efforts qui tendent à épuiser ce film.

2. Piston selon la revendication 1, caractérisé en ce que ladite matière est du polytétrafluoréthylène contenant des charges de métal et/ou est armée de fibres.

3. Piston selon l'une des revendications 1 et 2, caractérisé en ce que les moyens de mise sous contrainte de pression de la garniture (6) sont des moyens tendant à diminuer le volume de la gorge (7).

4. Piston selon la revendication 3, caractérisé en ce qu'il est divisé en au moins deux éléments télescopiques coaxiaux (8, 9), mobiles l'un par rapport à l'autre parallèlement à l'axe (X-X) du piston (1), et en ce que la gorge (7) du piston (1) est limitée à la fois par les deux éléments (8, 9) du piston (1).

5. Piston selon la revendication 4, caractérisé en ce que l'effort des gaz sur l'élément supérieur (8) est communiqué à l'élément inférieur (9) portant l'axe de la bielle (20) par l'intermédiaire de la garniture déformable (6).

6. Piston selon l'une quelconque des revendications 4 et 5, caractérisé en ce que les deux éléments (8, 9) sont sollicités l'un vers l'autre par au moins un ressort (12).

7. Piston selon l'une quelconque des revendications 4 à 6, caractérisé en ce que les deux éléments (8, 9) sont sollicités l'un vers l'autre par la pression de l'huile introduite dans le piston (1) par l'alimentation en huile (19).

8. Piston selon l'une quelconque des revendications 4 à 7, caractérisé en ce que la gorge (7) a une section qui s'évase vers l'extérieur.

9. Piston selon la revendication 3, caractérisé en ce qu'il constitue un ensemble rigide et en ce que la garniture (6a) est logée dans une gorge (7a) de ce piston

(1a) où elle est comprimée par des moyens élastiques (12a).

10. Piston selon l'une quelconque des revendications 1 à 9, caractérisé en ce que les moyens de guidage comprennent un patin cylindrique (18) porté par le piston (1,1a), d'axe parallèle à celui du piston (1,1a) et de diamètre légèrement inférieur au diamètre intérieur (D) du cylindre (2), ce patin (18) étant situé par rapport au piston (1,1a) de manière à avoir, avec la paroi intérieure (3) du cylindre (2), une génératrice de contact (G) dans le plan (P) d'une poussée latérale prépondérante.

11. Piston selon la revendication 10, caractérisé en ce que le patin de guidage (18) est constitué d'une matière ayant de bonnes qualités de frottement en lubrification onctueuse et ne fluant pas dans les conditions normales de fonctionnement.

12. Piston selon l'une quelconque des revendications 10 et 11, caractérisé en ce qu'il comporte une deuxième garniture (35) sous pression, logée dans une gorge située sous le patin (18) et coopérant avec la première garniture (6,6a) de manière à rattraper le jeu à l'opposé du patin (18) afin que ce dernier reste en contact avec la paroi intérieure (3) du cylindre (2) le long de la susdite génératrice (G).

13. Piston selon l'une quelconque des revendications 1 à 12, caractérisé en ce qu'il comporte, du côté basse pression de la première garniture annulaire (6,6a), une gorge annulaire (28), balayée par un débit d'huile sur toute sa circonférence.

14. Piston selon la revendication 13, caractérisé en ce qu'il comporte un orifice calibré (27) pour régler le débit d'huile.

15. Piston selon l'une quelconque des revendications 1 à 13, caractérisé en ce qu'il comporte, du côté haute pression de la première garniture annulaire (6a), un segment métallique cylindrique (45).

*Fig.1*

0173600

## Fig. 2

0173600

*Fig. 3*

*Fig. 4*

0173600

**Fig. 5**

**Fig. 6**

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl. 4) |
|---|---|---|---|
| A | GB-A- 6 116 (TRIST) (A.D. 1915) <br> * Page 2, ligne 21 - page 3, ligne 34; figures 1-4 * | 1,3-6, 8,9 | F 16 J 1/00 <br> F 16 J 1/08 <br> F 02 F 3/00 |
| | --- | | |
| A | FR-A- 374 090 (STHURLER) <br><br> * Page 1, ligne 8 - page 2, ligne 1; figures * | 1,3-5, 8,9 | |
| | --- | | |
| A | US-A-1 518 986 (KRUSE) <br><br> * Page 1, ligne 52 - page 2, ligne 77; figures 1,2 * | 1,3-5, 8,12 | |
| | --- | | |
| A | FR-A- 489 898 (SPENCER) <br><br> * Page 2, lignes 25-82; page 3, lignes 58-80; figures 1-6 * | 1,3-6, 8,9 | **DOMAINES TECHNIQUES RECHERCHES (Int. Cl. 4)** |
| | --- | | |
| A | US-A-1 776 324 (RILEY) <br><br><br> * Page 1, ligne 80 - page 3, ligne 62; figures 1-11 * | 1,3-5, 8,9,12 ,13 | F 16 J <br> F 02 F |
| | ----- | | |

Le présent rapport de recherche a été établi pour toutes les revendications

| Lieu de la recherche <br> LA HAYE | Date d'achèvement de la recherche <br> 18-11-1985 | Examinateur <br> LEGER M.G.M. |
|---|---|---|